# EUROPÄISCHE PATENTSCHRIFT

(11) **EP 2 753 408 B1**
(45) Veröffentlichungstag und Bekanntmachung des Hinweises auf die Patenterteilung: **13.01.2016**
(21) Anmeldenummer: 12791085.9
(22) Anmeldetag: 31.08.2012
(51) Int. Cl.: B01D 29/52, B01D 29/66, B01D 29/84

(54) **FILTERANLAGE FÜR EIN FLÜSSIGES MEDIUM**
FILTER SYSTEM FOR A LIQUID MEDIUM
DISPOSITIF DE FILTRAGE POUR SUBSTANCE FLUIDE

(30) Priorität: 09.09.2011 DE 102011053424
(43) Veröffentlichungstag der Anmeldung: 16.07.2014
(73) Patentinhaber: Mayfran International B.V., 6370 AA Landgraaf (NL)
(72) Erfinder: JÄNEN, Johannes, 53840 Troisdorf (DE)
(74) Vertreter: Naeven, Ralf
(86) Internationale Anmeldenummer: PCT/DE2012/100257
(87) Internationale Veröffentlichungsnummer: WO 2013/034144

(56) Entgegenhaltungen:
- CH-A- 462 112
- US-A1- 2005 263 447
- US-A1- 2010 051 121
- US-A1- 2010 051 524

## Beschreibung

Die Erfindung betrifft eine Filteranlage für ein flüssiges Medium gemäß dem Oberbegriff des Anspruchs 1.

Bei dem flüssigen Medium kann es sich z. B. um ein Arbeitsmittel handeln, vorzugsweise um einen Kühlschmierstoff, wie er in der spanabhebenden Bearbeitung, insbesondere in der metallverarbeitenden Industrie, eingesetzt wird. Eine Filteranlage der eingangs genannten Art ist z. B. aus der DE 10 2007 049 658 A1 bekannt. Darin ist ein Filtermodul offenbart, welches ein Filtergehäuse mit darin angeordneten Filterelementen, einen Reintank sowie einen Schmutztank aufweist. Aus einer Unfiltratquelle, z. B. einem Auslass für verunreinigten Kühlschmierstoff einer oder mehrerer Bearbeitungsmaschinen, wird Unfiltrat dem Schmutztank zugeführt. Aus dem Schmutztank wird das Unfiltrat einer Unfiltratseite des Filtergehäuses mittels einer Pumpe zugeführt und das flüssige Medium durch die Filterelemente gepresst. Von der Filtratseite aus wird das Filtrat dem Reintank zugeführt, von wo es seiner weiteren Bestimmung, z. B. als frischer Kühlschmierstoff für Bearbeitungsmaschinen, zugeführt wird.

Die Filterelemente werden von Zeit zu Zeit mittels eines Rückspülprozesses einer Reinigung unterzogen. Hierzu offenbart der zitierte Stand der Technik, die Zuführung von Unfiltrat und die Abführung von Filtrat zunächst zu unterbinden und das im Filterbehälter verbliebene Unfiltrat in den Schmutztank zu leiten. Anschließend wird gegebenenfalls noch verbliebenes Filtrat mittels Druckluft durch die Filterelemente gepresst, so dass sich der Filterkuchen von den Filterelementen löst. Das abgelöste Material wird dem Schmutztank - gegebenenfalls über einen weiteren Filterschritt - zugeführt. Schließlich kann mittels durch die Filterelemente gepresster Druckluft der Reinigungsprozess weitergeführt werden. Nach der Reinigung kann der Filterprozess wieder in Gang gesetzt werden. Die Filteranlage steht während des Reinigungsprozesses für die Filterung von Unfiltrat nicht zur Verfügung.

Die Größe und Kapazitäten von Filteranlagen werden durch die dahinter stehende Anwendung bestimmt, in der Metall verarbeitenden Industrie z. B. durch die Größe und Anzahl der Bearbeitungsmaschinen und den hierdurch vorgegebenen Bedarf an Kühlschmierstoffen. Verändert sich ein Bedarf, z. B. im Falle der Vergrößerung der Bearbeitungskapazitäten, muss oftmals auch die Filteranlage angepasst werden. Dies bedeutet entweder eine kostenträchtige Neuanschaffung der kompletten Anlage oder zumindest einzelner Teile, wie z. B. des Filtergehäuses und der Tanks, oder es werden zusätzliche Filtergehäuse und/oder Tanks vorgesehen, die mit der vorhandenen Anlage zu verbinden sind. Zudem weisen die bekannten Filteranlagen einen erheblichen und kostenträchtigen Platzbedarf auf.

Aus der US 2010/051524 A1 ist eine Filteranlage für eine hydraulische Flüssigkeit bekannt, bei der das Unfiltrat über eine Zuleitung einer Filteranordnung zugeführt wird, die zweistufig ausgebildet ist und eine erste Filterkammer und eine zweite Filterkammer aufweist. Die Filteranordnung ist in einem an einem Reservoir für Filtrat aufweisenden Tank angeordnet und dort vollständig von Filtrat umgeben. Eine Regeneration der Filteranordnung ist nicht erwähnt und wurde auch nicht vorgesehen. Ein nach unten weisender Auswurfschacht für einen Filterkuchen ist nicht offenbart. Sich bei einem Rückspülprozess ablösende Schmutzpartikel würden sich auf dem Boden des Filterbehälters absetzen und könnten nicht oder nur aufwändig händisch entfernt werden.

Aus der US 2010/0051121 A1 ist ein weiterer hydraulischer Speichertank mit einer innerhalb des Speichers angeordneten und damit von der zu filternden Flüssigkeit umgebenen Filteranlage bekannt. Die Filteranlage umfasst dabei eine Auffangkammer für größere Partikel, bevor die Flüssigkeit zum Speicher zurückgeführt wird. Die Abtrennung der großen Partikel erfolgt mittels Zentrifugalkraft auf Grund einer entsprechenden Bewegung der Flüssigkeiten.

Die US 2005/263447 A1 offenbart ein System zur Abwasserbehandlung, welches sich unterirdisch erstreckt. Der eingesetzte Filter wird weder von einer Quelle oder von einem Zieltank des Filtrats oder Unfiltrats umgeben.

Die CH 462 112 A offenbart einen durch Rückspülung regenerierbaren Filter, wobei eine Mehrzahl von Filterbehaltern nebeneinander angeordnet ist.

Der Erfindung liegt daher das technische Problem zugrunde, eine Filteranlage der eingangs genannten Art zur Verfügung zu stellen, die Platz sparend gebaut ist und in besonderer Weise für eine Anpassung an sich ändernden Filterbedarf geeignet ist.

Diese Aufgabe wird bei einer Filteranlage der eingangs genannten Art durch die Merkmale des Anspruchs 1 gelöst. Vorteilhafte Ausführungsformen sind durch die Unteransprüche gegeben.

Demnach ist vorgesehen, dass eine Behältereinheit des Filtermoduls die andere umgibt. So kann z. B. das Filtergehäuse durch einen ersten Tank, z. B. den Schmutztank, umgeben sein. Sofern mindestens ein zweiter Tank, z. B. der Reintank benötigt wird, kann dieser in entsprechender Weise verschachtelt, z. B. den Schmutztank umgebend, angeordnet sein. Es ist auch möglich, das Filtergehäuse ringförmig einen der Tanks oder gar sämtliche Tankeinheiten umgebend auszubilden.

Die Reihenfolge der verschiedenen Behältereinheiten ist austauschbar. Dabei kann die äußere Seite der Seitenwand einer inneren Behältereinheit gleichzeitig als Innenwand der sie umgebenden Behältereinheit dienen. Ist die innerste Behältereinheit z. B. durch das Filtergehäuse gegeben, kann ein Teil der Außenwand des Filtergehäuses gleichzeitig als Begrenzung für den umgebenden Tank, z. B. den Schmutztank, dienen. Die Außenwand dieses Schmutztankes kann dann z. B. auch die Innenwand des ihn ringförmig umgebenden Reintanks bilden. Dieser schalenartige Aufbau der Behältereinheiten ist in besonderer Weise Platz sparend. Zudem werden hierdurch die notwendigen Rohrleitungen zwischen den Behältereinheiten eingespart oder können zumindest sehr kurz ausgeführt werden.

Umgibt eine Behältereinheit die andere, so kann dies vollständig sein in dem Sinne, dass die Seitenwandung der inneren Behältereinheit vollständig von der anderen Behältereinheit umfasst wird.

In einer vorteilhaften Ausführungsform kann das Umschließen der inneren Behältereinheit aber auch unvollständig ausgeführt sein, in dem Sinne, dass noch ein seitlicher Zugang zur inneren Behältereinheit bleibt, z. B. zu Wartungsarbeiten oder - sofern die innere Behältereinheit das Filtergehäuse ist - zur Erleichterung des Ausbaus oder Austauschs von Filtereinheiten, z.B. Filterkerzen. Hierfür kann z.B. die äußere Behältereinheit die Seitenwandung lediglich mindestens 60 %, vorzugsweise mindestens 70 %, weiter vorzugsweise mindestens 75 % des Umfanges umschließen. Alternativ kann die innere Behältereinheit in einem oder mehreren bestimmten Bereichen auf dem vollen Umfange von der äußeren Behältereinheit umschlossen sein, während mindestens ein anderer Bereich für einen Zugang frei bleibt. Wird die innere Behältereinheit von mehreren anderen Behältereinheiten umgeben, kann durch geeignete Anordnung der weiter außen angeordneten Behältereinheit(en) der Zugang zur inneren Behältereinheit frei gelassen werden. Ein seitlicher Zugang ist besonders vorteilhaft, wenn eine gegebene Raumhöhe möglichst vollständig für die Höhe des Filtermoduls ausgenutzt werden soll.

Die Behältereinheiten werden durch eine Trägerstruktur getragen, wobei mindest ein tragendes Element der Trägerstruktur gleichzeitig als Fluidleitung dienen kann. Hierdurch können in gewissem Rahmen Fluidleitungen eingespart werden.

Das aus den Behältereinheiten und der Trägerstruktur bestehende Filtermodul kann durch seinen kompakten Aufbau in seinen äußeren Abmessungen so dimensioniert werden, dass es in seiner Gänze mittels straßentauglicher Transporter, z. B. mittels eines LKWs, ohne Sondergenehmigung für Übermaße transportiert werden kann.

Die erfindungsgemäße Filteranlage kann aus einem einzigen Filtermodul bestehen. Ein Filtermodul kann aber auch so ausgebildet sein, dass es mit weiteren Filtermodulen koppelbar ist. Auf diese Weise lässt sich die Filteranlage in grundsätzlich beliebiger Weise erweitern. Ein Grundmodul, das für sich alleine funktionsfähig und als Filteranlage einsetzbar ist, kann vom Benutzer als Grundelement eingesetzt werden. Bei Bedarf und Vergrößerung der Kapazitäten ist eine Ergänzung durch weitere Module möglich. Hierfür können an dem Filtermodul bereits Koppelelemente vorgesehen werden, um die notwendigen Verbindungen zwischen den Filtermodulen zu schaffen. In umgekehrter Weise können bei einer Verringerung des Bedarfs einzelne Module auch entfernt werden.

Besteht die Filteranlage aus mindestens zwei Modulen, ist es überdies möglich, eines der Module zu reinigen, während das mindestens eine weitere Filtermodul das flüssige Medium weiter filtern kann. Insbesondere bei einer größeren Anzahl von Filtermodulen kann der Reinigungsvorgang optimal durchgeführt werden, ohne dass hierdurch der Filterprozess insgesamt negativ beeinflusst wird.

Insbesondere ist es möglich, die Tankelemente verschiedener Filtermodule über Fluidleitungen derart miteinander zu koppeln, dass sie wie ein gemeinsamer Tank genutzt werden können. Dies hat insbesondere auch für die Filterreinigung Vorteile. So können die Tankinhalte des zu reinigenden Filtermoduls und zusätzlich die Tankinhalte der weiteren Filtermodule für den Filterreinigungsprozess genutzt werden. Hierdurch lässt sich die zur Verfügung stehende maximale Reinigungszeit verlängern mit der Folge einer Verbesserung der Prozessqualität, z.B. durch eine verlängerte Anschwemmzeit oder eine verlängerte Trocknungszeit für den Filterkuchen.

Bei einer größeren Anzahl von Filtermodulen kann eines der Filtermodule redundant geführt werden. Somit kann ein zu reinigendes oder ein havariertes Filtermodul durch das redundante Filtermodul ersetzt und ein negativer Einfluss der Filterreinigung oder der Havarie auf den Filterprozess vermieden werden.

Filteranlagen können beispielsweise aus 5 oder 6 Filtermodulen bestehen. Diese Größenordnung kann eine weitgehend störungsfreie durchgehende Filterung gewährleisten. Bei außergewöhnlich großem Kühlschmierstoffbedarf kann eine erfindungsgemäße Filteranlage aber auch aus mehr als sechs Filtermodulen bestehen. Bei entsprechend geringem Kühlschmierstoffbedarf kann auch der Einzelbetrieb eines Filtermoduls oder eine Filteranlage aus 2, 3 oder 4 Filtermodulen sinnvoll sein.

Die Abstimmung der Filtermodule untereinander kann durch eine entsprechend eingerichtete Steuerung erreicht werden, z. B. indem eine Mastersteuerung eine oder mehrere Filtermodule steuert, wobei die Filtermodule jeweils eine von der Mastersteuerung abhängige Slave-Steuerung aufweisen können.

Bevorzugte Ausführungsbeispiele der erfindungsgemäßen Filteranlage sind im Folgenden anhand von Figuren dargestellt. Es zeigt schematisch
- Fig. 1:: ein Filtermodul im seitlichen Querschnitt,
- Fig. 2:: das Filtermodul gemäß Fig. 1 in einem Querschnitt in Aufsicht,
- Fig. 3:: eine Filteranlage mit drei Filtermodulen,
- Fig. 4:: ein Filtermodul in perspektivischer Darstellung mit Stützstrukturelementen,
- Fig. 5:: schematische Darstellung der Generationsphase und
- Fig. 6: eine alternative Ausbildungsform eines Filtermoduls.

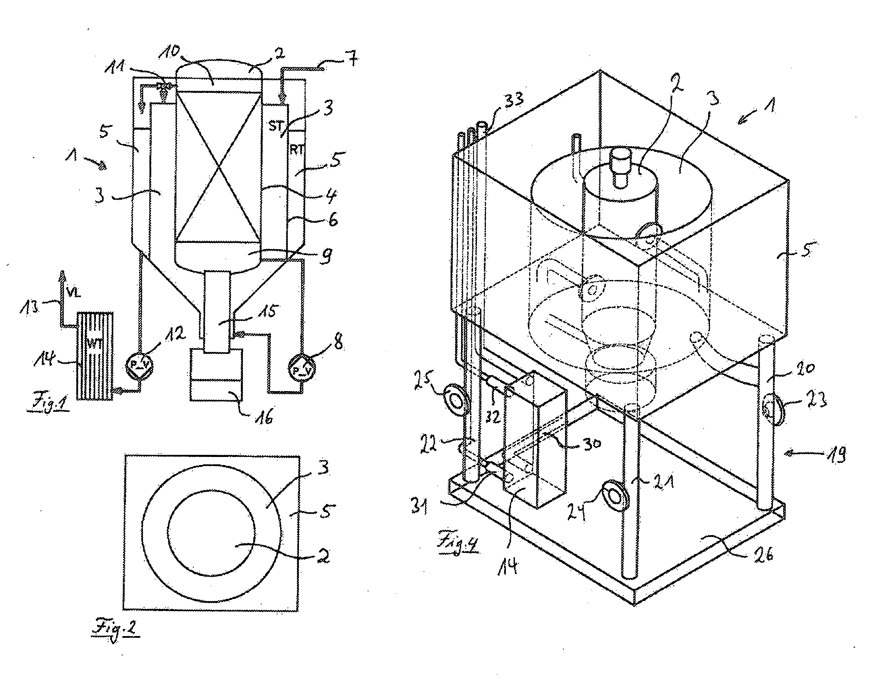

Fig. 1 zeigt schematisch ein Filtermodul 1 in einem seitlichen Querschnitt. Ein Filterbehälter 2 mit hier nicht näher dargestellten Filterkerzen ist von einem Schmutztank 3 umgeben. Eine Außenwand 4 des Filterbehälters 2 bildet somit zugleich eine Innenwand des Schmutztanks 3. Der Schmutztank 3 ist von einem Reintank 5 umgeben, wobei eine Außenwand 6 des Schmutztanks 3 gleichzeitig eine Innenwand des Reintanks 5 bildet. Durch das Ineinandersetzen von Filterbehälter 2, Schmutztank 3 und Reintank 5 ist ein sehr Platz sparendes Konzept für das Filtermodul 1 gegeben.

Fig. 2 zeigt das Filtermodul 1 gemäß Fig. 1 in einem Querschnitt in Aufsicht.

Ein Filtermodul 1 der hier betroffenen Art kann als Filteranlage für den Kühlschmiermittelstoff von hier nicht dargestellten Bearbeitungsmaschinen dienen. Über einen KSS-Rücklauf 7 gelangt z.B. von den Bearbeitungsmaschinen stammender verschmutzter Kühlschmierstoff in den Schmutztank 3. Über eine Unfiltratpumpe 8 wird belasteter Kühlschmierstoff aus dem Schmutztank 3 in eine Unfiltratkammer 9 des Filterbehälters 2 gepumpt. Über eine Druckdifferenz wird das Unfiltrat durch die hier nicht dargestellten Filterkerzen gedrückt und dadurch filtriert. Hierdurch füllt sich eine Filtratkammer 10 des Filterbehälters 2 mit Filtrat. Das Filtrat, der filtrierte Kühlschmierstoff, gelangt über ein 3-Wege-Ventil 11 in den Reintank 5, von wo aus das Filtrat über eine Filtratpumpe 12 einem KSS-Vorlauf 13 für den Kühlschmierstoff und damit wieder unmittelbar oder mittelbar über einen hier nicht dargestellten Kühlschmierstoffbehälter den Bearbeitungsmaschinen zugeführt wird. Dabei wird das Filtrat über einen Wärmetauscher 14 geführt, um dem Kühlschmierstoff Wärme zu entziehen. Ist der Reintank 5 bis zu einem vorgegebenen Grenzwert gefüllt, wird das Filtrat über einen nicht dargestellten Überlauf zurück in den Schmutztank 3 gegeben.

Der Filterbehälter 2 weist einen Auswurfschacht 15 für den Filterkuchen auf. Die Regeneration des Filtermoduls 1 wird weiter unten dargestellt. Unterhalb des Auswurfschachtes 15 befindet sich eine Förderanlage 16 zum Abtransport des ausgeworfenen Filterkuchens.

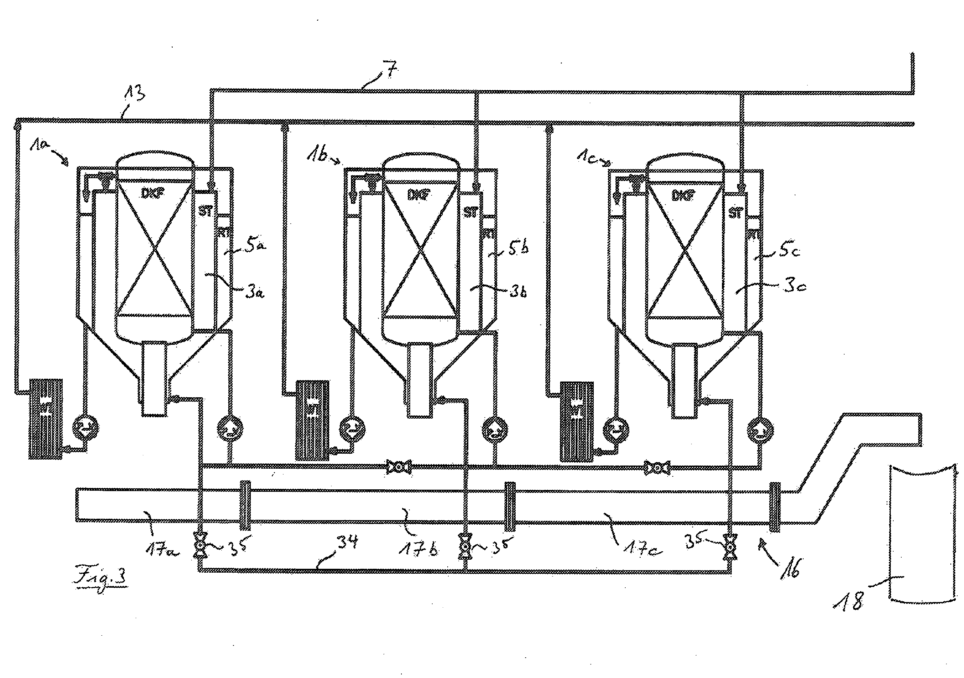

Fig. 3 zeigt eine Filteranlage aus drei Filtermodulen 1 a, 1 b und 1 c, die allesamt übereinstimmend aufgebaut sind. Wegen des Aufbaus der einzelnen Filtermodule 1 a, 1 b und 1 c wird auf die Beschreibung zu den Figuren 1 und 2 verwiesen.

Sämtliche Schmutztanks 3a, 3b und 3c der Filtermodule 1 a, 1b und 1 c sind mit dem KSS-Rücklauf 7 verbunden. Genauso speist jedes Filtermodul 1 a, 1b und 1 c in den KSS-Vorlauf 13 ein.

Unterhalb der Filtermodule 1 a, 1 b und 1 c sind einzelne Förderelemente 17a, 17b und 17c der Förderanlage 16 zu erkennen. Die Förderelemente 17 sind miteinander verbunden, so dass ein hierdurch aufgefangener Filterkuchen in einen Filterkuchenauffangbehälter 18 gelangt.

Der modulare Aufbau der Filteranlage gemäß Fig. 3 ermöglicht es, ein beliebiges einzelnes der Filtermodule 1a, 1b oder 1c zu regenerieren, während die Bearbeitungsmaschinen aus den Reintanks 5a, 5b und 5c aller Module 1 a, 1 b und 1 c mit gefiltertem Kühlschmierstoff weiter versorgt werden.

Es wird regelmäßig vorgesehen, die Menge an Kühlschmierstoff aus einem hier nicht dargestellten Vorratsbehälter bei Bedarf aufzufüllen. Dies kann z. B. durch Einleitung in einen der Reintanks 5a, 5b oder 5c erfolgen.

Die Schmutztanks 3a, 3b und 3c sind über eine Ausgleichsleitung 34 miteinander verbunden. Durch geeignete Ventilelemente 35 und/oder Verschlusselemente können einzelne Module 1 a, 1 b oder 1 c manuell oder automatisch von der Ausgleichsleitung 34 abgesperrt werden. In entsprechender hier nicht dargestellter Weise können auch die Reintanks 5a, 5 b und 5c über eine Ausgleichsleitung mit Absperrmöglichkeit miteinander verbunden werden. Die Ausgleichsleitungen ermöglichen einen Austausch der entsprechenden Flüssigkeit, z.B. nach dem Prinzip der kommunizierenden Röhren, zwischen den so verbundenen Tanks.

Die Filtermodule 1 a, 1 b und 1 c der Filteranlage gemäß Fig. 3 sind in der Steuerung der jeweiligen Pumpen aufeinander abgestimmt, wobei eine hier nicht dargestellte Master-Steuereinheit vorgesehen ist, dem die Slave-Steuerungen der Module 1a, 1b und 1 c folgen. Die Darstellung in Fig. 3 ist prinzipieller Art. Es können weitere Elemente, insbesondere Ventile, Absperrelemente oder dergleichen vorgesehen werden, die für den Betrieb sinnvoll sind.

Fig. 4 zeigt perspektivisch ein Filtermodul 1 einschließlich einer Stützstruktur 19. Diese Stützstruktur 19 trägt Reintank 5, Schmutztank 3 und Filterbehälter 2 und umfasst auf einem Grundelement 26 aufgesetzte Stützrohre 20, 21 und 22, die hohl ausgebildet sind und neben ihrer Stützfunktion als Fluidleitungen dienen. Ein viertes Stützrohr ist ebenfalls vorhanden und ist in der hinteren Ecke des Grundelements 26 aufgesetzt und in der Darstellung nicht sichtbar. Die Stützrohre 20, 21 und 22 weisen des weiteren Koppelpunkte 23, 24 und 25 (erforderlichenfalls auch einen weiteren Koppelpunkt am nicht sichtbaren vierten Stützrohr) auf, über die benachbarte Filtermodule 1 miteinander zum Austausch von Kühlschmierstoff (gefiltert oder ungefiltert) miteinander verbunden werden können.

Über die Fluidleitungen der hinteren beiden Stützrohre 22 erfolgt ein Fluidausgleich zwischen den Reintanks 5 aneinander gekoppelter Filtermodule 1. Außerdem kann hier die Ansaugung über die Filtratpumpe 12 (siehe Fig. 1) angeschlossen werden, die gefilterten Kühlschmierstoff aus dem Reintank 5 über einen Zulauf 30 dem Wärmetauscher 14 und weiter über die Verbindungsleitung 33 dem Kühlschmierstoff-Vorlauf 13 zuführt. Am Wärmetauscher 14 sind zudem Kühlwasserzulauf 31 und Kühlwasserablauf 32 angeschlossen.

Die Stützrohre 20 und 21 sind jeweils mit dem Schmutztank 3 verbunden und sorgen für einen Fluidausgleich zwischen den Schmutztanks 3 aneinander gekoppelter Filtermodule 1.

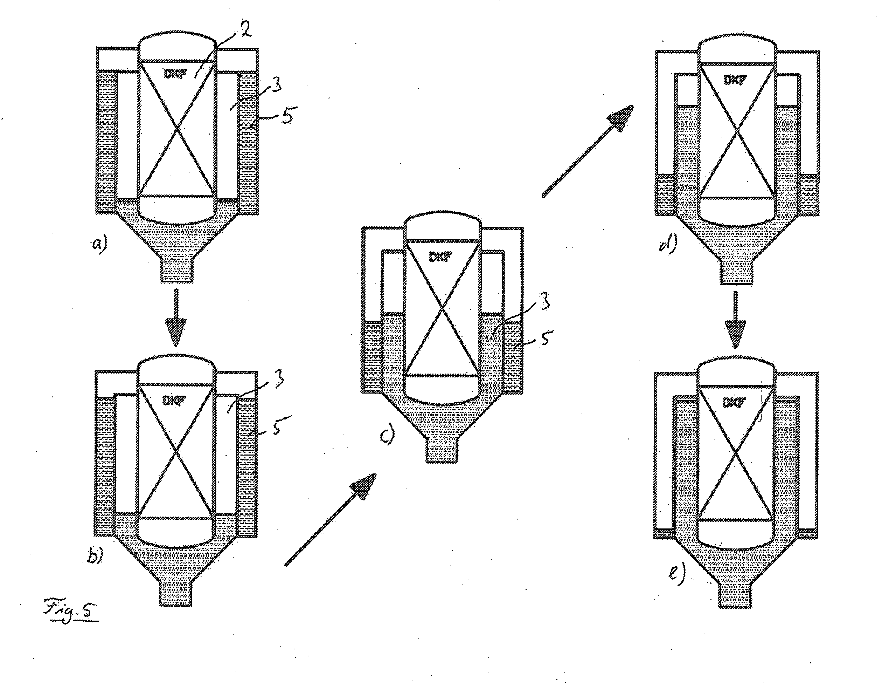

Fig. 5 verdeutlicht einen Regenerationsvorgang in einem Filtermodul 1, in dem die verschiedenen Phasen der Regeneration am selben Filtermodul 1 dargestellt sind.
Fig. 5a zeigt das Filtermodul 1 im Filterbetrieb, wobei der Reintank 5 zu 100% gefüllt ist.

Zu Beginn der Regeneration wird der Filterbehälter 2 geleert, indem sein Inhalt (Filtrat und Unfiltrat) in den Schmutztank 3 entleert wird. Der Reintank 5 versorgt dabei weiter die Bearbeitungsmaschinen mit Kühlschmierstoff, weshalb sein Füllungsgrad über die verschiedenen Phasen der Regeneration abnimmt (Fig. 5b)). Ist der Filterbehälter 2 zumindest nahezu vollständig von Flüssigkeit befreit, wird der Filterkuchen, nach einem eventuellen Zwischenschritt der Trocknung des Filterkuchens mittels Pressluft, von den Filterkerzen gelöst, z. B. durch einen Schlagimpuls. Der Kuchen kann durch den in Fig. 5 nicht dargestellten Auswurfschacht 15 (siehe Fig. 1) entweichen und wird über die in Fig. 5 ebenfalls nicht dargestellte Förderanlage 16 (Fig. 3) abtransportiert. In dieser Zeit hat der Füllungsgrad des Reintanks 5 weiter abgenommen und der des Schmutztanks 3 zugenommen. Die Änderung des Füllungsgrades ergibt sich aus der Kopplung mit anderen Filtermodulen 1 verbunden mit dem Abruf von gefiltertem Kühlschmierstoff und der Zuführung von verschmutztem Kühlschmierstoff durch die Bearbeitungsmaschinen.

Für einen optimalen Filterbetrieb benötigen Filterkerzen allerdings einen gewissen Filterkuchenbelag, da dieser die Filterwirkung deutlich verbessert. Aufgrund dessen wird Flüssigkeit aus dem Schmutztank 3 an die Filterkerzen angeschwemmt, so dass sich dort wieder ein Filterkuchenansatz bildet. Nachdem der Filterkuchen in hinreichender Weise angeschwemmt ist oder nachdem die Volumina der verschiedenen Reintankbehälter zwecks Regeneration voll ausgenutzt sind, wird das Filtrat in den Reintank 5 zurückgegeben und der Filterbetrieb wird wieder eingesetzt (Fig. 5e).

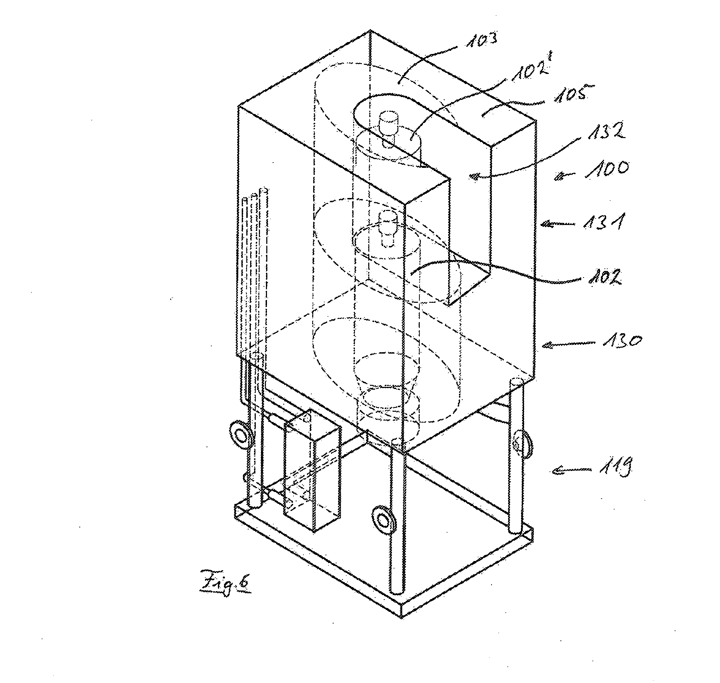

Figur 6 zeigt eine alternative Form eines Filtermoduls 100, mit gegenüber dem Filtermodul 1 gemäß den Figuren 1 bis 5 geänderten Behältereinheiten Filterbehälter 102, Schmutztank 103 und Reintank 105.

In einem unteren Teil 130 des Behälterkomplexes ist der Filterbehälter 2 in vollem Umfange vom Schmutztank 103 und dieser wiederum in vollem Umfange vom Reintank 105 umgeben. In einem oberen Teilbereich 131 weisen sowohl der Schmutztank 103 als auch der Reintank 105 eine gemeinsame Zugangsaussparung 132 auf, die einen Zugang zum Filterbehälter 102 erlaubt. Der Filterbehälter 102 ist in seiner Betriebsposition gestrichelt dargestellt. Mit dem Bezugszeichen 102' ist die obere, für einen seitlichen Ausbau der Filterelemente hinreichende Position eines oberen Deckelelements des Filterbehälters 102 versehen, welches zusammen mit den Filterelementen angehoben werden kann. Somit können Schmutztank 103 und Reintank 105 die Raumhöhe eines Aufstellungsraums vollständig ausnutzen, da die Filterelemente des Filterbehälters 102 nicht mehr nach oben über den Schmutztank 103 und Reintank 105 hinaus für den Ausbau angehoben werden müssen. Auf diese Weise kann der Behälterinhalt von Schmutztank 103 und Reintank 105 in Bezug auf die zur Verfügung stehende Raumhöhe optimiert werden.

Eine Stützstruktur 119 sowie der sonstige Aufbau des Filtermoduls 100 entspricht dem des Filtermoduls 1 gemäß den Figuren 1 bis 5.

**Bezugszeichenliste**

| | | | |
|---|---|---|---|
| 1 | Filtermodul | 100 | Filtermodul |
| 2 | Filterbehälter | 102 | Filterbehälter |
| 3 | Schmutztank | 103 | Schmutztank |
| 4 | Außenwand des Filterbehälters | 105 | Reintank |
| 5 | Reintank | 119 | Stützstruktur |
| 6 | Außenwand des Schmutztanks | 130 | Unterer Teil Behälterkomplex |
| 7 | KSS-Rücklauf | 131 | Oberer Teil Behälterkomplex |
| 8 | Unfiltratpumpe | 132 | Zugangsaussparung |
| 9 | Unfiltratkammer | | |
| 10 | Filtratkammer | | |
| 11 | 3-Wege-Ventil | | |
| 12 | Filtratpumpe | | |
| 13 | KSS-Vorlauf | | |
| 14 | Wärmetauscher | | |
| 15 | Auswurfschacht | | |
| 16 | Förderanlage | | |
| 17 | Förderelement | | |
| 18 | Filterkuchenauffangbehälter | | |
| 19 | Stützstruktur | | |
| 20 | Stützrohr | | |
| 21 | Stützrohr | | |
| 22 | Stützrohr | | |
| 23 | Koppelpunkt | | |
| 24 | Koppelpunkt | | |
| 25 | Koppelpunkt | | |
| 26 | Grundelement | | |
| 30 | KSS-Zulauf | | |
| 31 | Kühlwasserzulauf | | |
| 32 | Kühlwasserablauf | | |
| 33 | Verbindungsleitung | | |
| 34 | Ausgleichsleitung für Schutztanks | | |

## Patentansprüche

1. Filteranlage für ein flüssiges Medium, umfassend mindestens ein regenerierbares Filtermodul (1, 100) mit mindestens zwei jeweils eine äußere Seitenwandung (4, 6) aufweisenden Behältereinheiten, wobei eine der Behältereinheiten ein eine Filterkerze aufweisendes geschlossenes Filtergehäuse (2, 102) und jede andere Behältereinheit jeweils ein Tankelement bildet und das Filtergehäuse einen unterhalb der Filterkerze angeordneten und für den Auswurf nach unten ausgerichteten Auswurfschacht (15) für Filterkuchen aufweist, **dadurch gekennzeichnet, dass**
eine der Behältereinheiten als innere Behältereinheit entlang zumindest eines überwiegenden Teils des Umfangs ihrer Seitenwandung (4, 6) von der anderen Behältereinheit oder im Fall von mindestens drei Behältereinheiten von mindestens einer der anderen Behältereinheiten umgeben ist.

2. Filteranlage nach Anspruch 1, **dadurch gekennzeichnet, dass** die innerste Behältereinheit das Filtergehäuse (2, 102) ist.

3. Filteranlage nach Anspruch 1 oder 2, **dadurch gekennzeichnet, dass** zwei Tankelemente vorgesehen sind, wobei eines der beiden Tankelemente ein Reintank (5) und das andere Tankelement ein Schmutztank (3) ist.

4. Filteranlage nach einem der Ansprüche 1 bis 3, **dadurch gekennzeichnet, dass** das Filtergehäuse (2, 102) von mindestens einem Tankelement lediglich entlang eines Teils der Seitenwandung (4, 6) derart umgeben ist, dass das mindestens eine Tankelement eine Zugangsöffnung (132) auf die Seitenwandung (4, 6) des Filtergehäuses (2, 102) freilässt.

5. Filteranlage nach einem der Ansprüche 1 bis 4, **dadurch gekennzeichnet, dass** zumindest ein Teil einer Außenseite der Seitenwandung (4, 6) einer inneren der Behältereinheiten zumindest einen Teil der Innenwand der diese innere Behältereinheit umgebenden Behältereinheit bildet.

6. Filteranlage nach einem der vorherigen Ansprüche, **dadurch gekennzeichnet, dass** die Behältereinheiten von einer Stützstruktur (19, 119) getragen sind, wobei mindestens ein tragendes Element (20, 21, 22) der Stützstruktur (19, 119) als Fluidleitung dient.

7. Filteranlage nach einem der vorherigen Ansprüche, **dadurch gekennzeichnet, dass** das mindestens eine Filtermodul (1, 102) mindestens ein Koppelelement (23, 24, 25) zum Anschluss eines fluidübertragenden Elements aufweist.

8. Filteranlage nach Anspruch 7, **dadurch gekennzeichnet, dass** zumindest eines der Koppelelemente (23, 24, 25) an der Stützstruktur (19, 119) vorgesehen ist.

9. Filteranlage nach einem der vorherigen Ansprüche, **dadurch gekennzeichnet, dass** mindestens zwei Filtermodule (1, 100) vorgesehen sind, wobei die Filtermodule (1, 100) untereinander zum Austausch von Fluiden zwischen den Tankelementen verschiedener Filtermodule (1, 100) miteinander verbunden sind.

10. Filteranlage nach Anspruch 9, **gekennzeichnet durch** mindestens drei Filtermodule (1, 100), wobei der Reintank (5, 105) und/oder der Schmutztank (3, 103) mindestens eines der Filtermodule (1, 100) mit den entsprechenden Tankelementen mindestens zweier anderer Filtermodule über fluidübertragende Elemente verbunden ist (sind).

11. Filteranlage nach Anspruch 9 oder 10, **dadurch gekennzeichnet, dass** für jedes Filtermodul (1, 100) eine eigene Modul-Steuereinheit zur Steuerung von Fluidflüssen zwischen den Behältereinheiten und/oder zwischen den Filtermodulen (1, 100) vorgesehen ist.

12. Filteranlage nach Anspruch 11, **dadurch gekennzeichnet, dass** eine Master-Steuereinheit für die Steuerung der Filteranlage vorgesehen ist und jede Modul-Steuereinheit als der Master-Steuereinheit untergeordnete Slave-Steuereinheit eingerichtet ist.

13. Filteranlage nach einem der vorherigen Ansprüche, **dadurch gekennzeichnet, dass** das Filtermodul (1, 100) oder mindestens eines der Filtermodule (1, 100) eine Filterkuchen-Abtransporteinrichtung (16, 17) aufweist.

14. Filteranlage nach Anspruch 13, **dadurch gekennzeichnet, dass** Filterkuchen-Abtransporteinrichtungen (16, 17) benachbarter Filtermodule (1, 100) miteinander koppelbar sind.

## Claims

1. Filter system for a liquid medium, comprising at least one regenerable filter module (1, 100) having at least two container units, each having an outer side wall (4, 6), wherein one of the container units forms a closed filter housing (2, 102) having a filter cartridge and each other container unit in each case forms a tank element, and the filter housing has a filter cake ejection shaft (15) which is arranged below the filter cartridge and is oriented downward for the ejection, **characterized in that** one of the container units, as an inner container unit, is surrounded along at least a predominant portion of the extent of the side wall (4, 6) thereof by the other container unit or, in the case of at least three container units, by at least one of the other container units.

2. Filter system according to Claim 1, **characterized in that** the innermost container unit is the filter housing (2, 102).

3. Filter system according to Claim 1 or 2, **characterized in that** two tank elements are provided, wherein one of the two tank elements is a pure tank (5) and the other tank element is a dirt tank (3).

4. Filter system according to one of Claims 1 to 3, **characterized in that** the filter housing (2, 102) is surrounded by at least one tank element only along a portion of the side wall (4, 6) in such a manner that the at least one tank element leaves an access opening (132) to the side wall (4, 6) of the filter housing (2, 102) free.

5. Filter system according to one of Claims 1 to 4, **characterized in that** at least one portion of an outside of the side wall (4, 6) of an inner one of the container units forms at least one portion of the inner wall of the container unit surrounding said inner container unit.

6. Filter system according to one of the preceding claims, **characterized in that** the container units are carried by a supporting structure (19, 119), wherein at least one carrying element (20, 21, 22) of the supporting structure (19, 119) serves as a fluid line.

7. Filter system according to one of the preceding claims, **characterized in that** the at least one filter module (1, 100) has at least one coupling element (23, 24, 25) for the connection of a fluid-transferring element.

8. Filter system according to Claim 7, **characterized in that** at least one of the coupling elements (23, 24, 25) is provided on the supporting structure (19, 119).

9. Filter system according to one of the preceding claims, **characterized in that** at least two filter modules (1, 100) are provided, wherein the filter modules (1, 100) are connected to one another in order to exchange fluids with one another between the tank elements of different filter modules (1, 100).

10. Filter system according to Claim 9, **characterized by** at least three filter modules (1, 100), wherein the pure tank (5, 105) and/or the dirt tank (3, 103) of at least one of the filter modules (1, 100) is (are) connected to the corresponding tank elements of at least two other filter modules via fluid-transferring elements.

11. Filter system according to Claim 9 or 10, **characterized in that** a dedicated module control unit for controlling fluid flows between the container units and/or between the filter modules (1, 100) is provided for each filter module (1, 100).

12. Filter system according to Claim 11, **characterized in that** a master control unit is provided for controlling the filter system, and each module control unit is designed as a slave control unit which is subordinate to the master control unit.

13. Filter system according to one of the preceding claims, **characterized in that** the filter module (1, 100) or at least one of the filter modules (1, 100) has a filter cake removal apparatus (16, 17).

14. Filter system according to Claim 13, **characterized in that** filter cake removal apparatuses (16, 17) of adjacent filter modules (1, 100) are couplable to each other.

## Revendications

1. Dispositif de filtrage pour un milieu fluide, comprenant au moins un module de filtre pouvant être régénéré (1, 100) avec au moins deux unités de récipient présentant chacune une paroi latérale extérieure (4, 6), l'une des unités de récipient formant un boîtier de filtre fermé (2, 102) présentant une bougie de filtre et chaque autre unité de récipient formant respectivement un élément de réservoir et le boîtier de filtre présentant un puits d'éjection (15) pour des gâteaux de filtre, disposé en dessous de la bougie de filtre et orienté vers le bas en vue de l'éjection, **caractérisé en ce que**
l'une des unités de récipient en tant qu'unité de récipient intérieure est entourée le long d'au moins une partie principale de la périphérie de sa paroi latérale (4, 6) par l'autre unité de récipient ou, dans le cas d'au moins trois unités de récipient, par au moins l'une des autres unités de récipient.

2. Dispositif de filtrage selon la revendication 1, **caractérisé en ce que** l'unité de récipient la plus intérieure est le boîtier de filtre (2, 102).

3. Dispositif de filtrage selon la revendication 1 ou 2, **caractérisé en ce que** deux éléments de réservoir sont prévus, l'un des deux éléments de réservoir étant un réservoir propre (5) et l'autre élément de réservoir étant un réservoir sale (3).

4. Dispositif de filtrage selon l'une quelconque des revendications 1 à 3, **caractérisé en ce que** le boîtier de filtre (2, 102) est entouré par au moins un élément de réservoir uniquement le long d'une partie de la paroi latérale (4, 6) de telle sorte que l'au moins un élément de réservoir expose une ouverture d'accès (132) sur la paroi latérale (4, 6) du boîtier de filtre (2, 102).

5. Dispositif de filtrage selon l'une quelconque des revendications 1 à 4, **caractérisé en ce qu'**au moins une partie d'un côté extérieur de la paroi latérale (4, 6) d'une unité de récipient intérieure des unités de récipient forme au moins une partie de la paroi intérieure de l'unité de récipient entourant cette unité de récipient intérieure.

6. Dispositif de filtrage selon l'une quelconque des revendications précédentes, **caractérisé en ce que** les unités de récipient sont portées par une structure de support (19, 119), au moins un élément de support (20, 21, 22) de la structure de support (19, 119) servant de conduite fluidique.

7. Dispositif de filtrage selon l'une quelconque des revendications précédentes, **caractérisé en ce que** l'au moins un module de filtre (1, 100) présente au moins un élément de couplage (23, 24, 25) pour le raccordement d'un élément de transfert de fluide.

8. Dispositif de filtrage selon la revendication 7, **caractérisé en ce qu'**au moins l'un des éléments de couplage (23, 24, 25) est prévu au niveau de la structure de support (19, 119).

9. Dispositif de filtrage selon l'une quelconque des revendications précédentes, **caractérisé en ce qu'**au moins deux modules de filtre (1, 100) sont prévus, les modules de filtre (1, 100) étant connectés les uns aux autres pour l'échange de fluides entre les éléments de réservoir de différents modules de filtre (1, 100).

10. Dispositif de filtrage selon la revendication 9, **caractérisé par** au moins trois modules de filtre (1, 100), le réservoir propre (5, 105) et/ou le réservoir sale (3, 103) d'au moins l'un des modules de filtre (1, 100) étant connecté(s) aux éléments de réservoir correspondants d'au moins deux autres modules de filtre par le biais d'éléments de transfert de fluide.

11. Dispositif de filtrage selon la revendication 9 ou 10, **caractérisé en ce que** pour chaque module de filtre (1, 100) est prévue une unité de commande de module propre pour la commande de flux de fluide entre les unités de récipient et/ou entre les modules de filtre (1, 100).

12. Dispositif de filtrage selon la revendication 11, **caractérisé en ce qu'**une unité de commande maître est prévue pour la commande du dispositif de filtrage et chaque unité de commande de module est prévue en tant qu'unité de commande esclave subordonnée à l'unité de commande maître.

13. Dispositif de filtrage selon l'une quelconque des revendications précédentes, **caractérisé en ce que** le module de filtre (1, 100) ou au moins l'un des modules de filtre (1, 100) présente un dispositif d'évacuation des gâteaux de filtre (16, 17).

14. Dispositif de filtrage selon la revendication 13, **caractérisé en ce que** des dispositifs d'évacuation des gâteaux de filtre (16, 17) de modules de filtre (1 100) peuvent être accouplés les uns aux autres.
